# EUROPEAN PATENT APPLICATION

(11) **EP 1 725 050 A2**
(43) Date of publication of application: **22.11.2006**
(21) Application number: 06009660.9
(22) Date of filing: 10.05.2006
(51) Int. Cl.: H04N 9/31, H04N 5/74

(54) **Display system and method using a solid state laser**

(30) Priority: 19.05.2005 US 132943
(71) Applicant: Avago Technologies General IP Pte. Ltd., Singapore 768923 (SG)
(72) Inventor: Lester, Steven D., Palo Alto, CA 94306 (US); Bour, David P., Cupertino, CA 95014 (US); Corzine, Scott W., Sunnyvale, CA 94087 (US)
(74) Representative: Schoppe, Fritz

(57) **Abstract**

A display system (100, 300, 700, 800, 900, 910) in accordance with the present invention includes a display screen (115) having a phosphor that emits light in a wavelength range from about 450 nm to about 650 nm when excited by a laser beam. The laser beam is generated by a solid-state laser (105) having an operating wavelength range from about 330 nm to about 440 nm.

## Description

### DESCRIPTION OF THE RELATED ART

Electronic displays are implemented using various technologies such as liquid crystal display (LCD) technology, light emitting diode (LED) technology, and phosphor radiation technology. Phosphor radiation technology is an old and well-known technology that is best exemplified by a cathode ray tube (CRT).

The raster scan mode of the CRT typically conforms to one or more widely accepted scanning standards thereby ensuring compatibility among various components as well as a uniform level of picture quality among displays manufactured by various manufacturers.

However, the CRT suffers from several handicaps such as large bulk, excessive weight, high power consumption, and the presence of hazardous voltages. Consequently, the CRT is used only where such handicaps are acceptable and has, unfortunately, been found inappropriate in many modern applications. For example, a CRT cannot be readily integrated into small hand-held devices such as a personal digital assistant (PDA) or a cellular phone. Therefore, these devices often use alternative technologies more suited in terms of size, weight, and other features.

LCD technology is an alternative to CRT technology. LCD technology incorporates pixel-level light control elements that operate as "light shutters" to selectively propagate light.

LCDs consume less power than CRTs and have proved very suitable for many applications. Unfortunately, LCD displays may offer poor display visibility under certain ambient light conditions.

While LCD display systems utilize liquid crystals as pixel-level light control elements, some other display systems utilize elements that may be broadly classified as micro electro mechanical systems (MEMS). In one example of a MEMS application, an array of micro-mirrors is used to selectively direct light on to a display screen. MEMS technology is being employed in a variety of imaging devices and is proving popular in several applications where features such as high image brightness and clarity are desired.

However, high image brightness is typically obtained by using a high-intensity light source such as a halogen bulb. Unfortunately, the halogen bulb is an inefficient light source that suffers in comparison to a solid-state light source.

### SUMMARY

A display system in accordance with the present invention includes a display screen having a phosphor that emits light in a wavelength range from about 450 nm to about 650 nm when excited by a laser beam. The laser beam is generated by a solid-state laser having an operating wavelength range from about 330 nm to about 440 nm.

### BRIEF DESCRIPTION OF THE DRAWINGS

Many aspects of the invention can be better understood with reference to the following drawings. The components in the drawings are not necessarily to scale. Instead, emphasis is placed upon clearly illustrating the principles of the invention. Moreover, in the drawings, like reference numerals designate corresponding parts throughout the several views.

FIG. 1 shows a first exemplary embodiment of a display system incorporating a solid state laser, a beam guiding system and a display screen, which are some exemplary elements in accordance with the present invention.

FIG. 2 shows some additional elements of the display system of FIG. 1.

FIG. 3 shows a second exemplary embodiment of a display system incorporating a solid state laser and a backlight panel associated with a liquid crystal display (LCD) screen.

FIG. 4 shows an exemplary array of pixels and sub-pixels contained in the display screen of FIG. 1 or the backlight panel of FIG. 3.

FIG. 5 shows a first exemplary embodiment of the beam guiding system of FIG. 1.

FIG. 6A shows a perspective view of an exemplary embodiment of a mount that is a part of the beam guiding system of FIG. 1.

FIG. 6B shows a side-view of the mount of FIG. 6A.

FIG. 6C shows a top-view of the mount of FIG. 6A.

FIG. 7 shows an exemplary embodiment of a display system incorporating multiple solid state lasers.

FIG. 8 shows another exemplary embodiment of a display system incorporating a single solid state laser and a beam guiding system having multiple guiding elements.

FIG. 9 shows yet another exemplary embodiment of a display system incorporating a single solid state laser and a beam guiding system having multiple guiding elements.

FIG. 10 shows a display system containing a second exemplary embodiment of the beam guiding system of FIG. 1.

### DETAILED DESCRIPTION

The various embodiments in accordance with the invention relate to a display system that uses a solid state laser to excite a suitable phosphor to emit light. In one exemplary embodiment, a solid state laser generates a laser beam in an approximate wavelength range between 330 nm and 440 nm and uses the laser beam to excite the phosphor of a display screen. The excited phosphor emits light in an approximate wavelength range between 450 nm and 650 nm.

FIG. I shows a first exemplary embodiment of display system 100 in accordance with the invention that includes a solid state laser 105 optically coupled to a beam guiding system 110, which is in turn optically coupled to a display screen 115. In this exemplary embodiment, solid state laser 105 is an edge-emitting semiconductor laser composed of materials such as Aluminum, Gallium, Indium, and Nitrogen. Typically, solid state laser 105 is composed of several discrete layers of material that are formed upon a suitable substrate. Some examples of suitable substrates are: a gallium nitride (GaN) substrate, a silicon carbide (SiC) substrate, and a sapphire substrate.

Among the several discrete layers, one layer referred to as the active layer contains a quantum well region where light is generated when a suitable voltage bias is applied to solid state laser 105. The light is laterally confined to the active region by two cladding layers that exist on either side of the active layer. Though confined laterally, the light is allowed to propagate transversely along the length of the active region and is reflected by mirrored end facets. After one or more such reflections, the light is allowed to escape transversely from an opening located on an edge facet of solid state laser 105. This emitted light constitutes laser beam 106 in accordance with the present invention.

The emission wavelength of laser beam 106, also termed the operating wavelength, is determined in large part by the material of the active layer. Typically, the active layer is composed of indium gallium nitride (InGaN), while the other layers, for example the cladding layers, are composed of compounds such as aluminum gallium nitride (AlGaN) or gallium nitride (GaN). In this exemplary embodiment, solid state laser 105 has an operating wavelength from approximately 330 nm to approximately 440 nm, with an optimal operating wavelength of approximately 405 nm.

Several commercially-available solid state lasers are suitable for use as solid state laser 105. For example, Nichia Corporation of Japan provides several laser diode modules operating in various wavelength ranges that are in accordance with the present invention.

Beam guiding system 110 receives laser beam 106 from solid state laser 105 and directs it upon display screen 115. In one exemplary embodiment, beam guiding system 110 contains a light reflecting element, such as a mirror. The mirror is configured at a first instance, to receive laser beam 106 and direct it upon a first location on display screen 115. The mirror is then re-configured at a second instance, to receive laser beam 106 and direct it upon a second location on display screen 115. In this manner, the mirror can be dynamically configured to direct laser beam 106 upon various locations on display screen 115. In one embodiment, the mirror is dynamically configured to generate a scanning pattern, such as an interlaced television scanning pattern or a progressive scan pattern.

In another exemplary embodiment, beam guiding system 110 contains an array of micro-mirrors. Laser beam 106 is directed by suitable optical components (not shown) to be incident upon the array of micro-mirrors. Each micro-mirror is configured at any particular instance to point in one of two directions. When pointed in a first direction, the micro-mirror directs the received laser beam towards a first location on display screen 115 thereby exciting a phosphor at that first location to emit light. However, when pointed in the second direction, the micro-mirror directs the received laser beam in a direction pointing away from display screen 115. Therefore, the phosphor at the first location described above fails to emit light thereby creating a dark spot. Because each micro-mirror can be individually configured to point in one of the two directions, the array of micro-mirrors effectively operates as an array of optical switches directing the laser beam towards display screen 115 in an array pattern of light and dark spots. Each spot corresponds to one pixel of the resulting pixelated image displayed on display screen 115.

While in the embodiments disclosed above, beam guiding system 110 uses a light reflecting element, in an alternative embodiment, beam guiding system 110 uses a light diffracting element. For example, in this alternative embodiment, a grating is configured to receive laser beam 106 and direct a diffracted pattern upon display screen 115. In one application, the diffracted pattern creates a diffused illumination that simultaneously illuminates the entire surface of display screen 115.

Display screen 115 has a first major surface upon which is present a phosphor layer that is excited by the laser beam described above. An opposing major surface is a viewing surface through which light generated by the phosphor radiates outwards towards a viewer.

The phosphor layer is configured in a pixelated pattern with each pixel containing several sub-pixels. For example, in one embodiment, the pixel contains three sub-pixels. Each of the sub-pixels contains a phosphor selected to emit light of a particular wavelength when the phosphor is excited by laser beam 106. The first sub-pixel contains a first phosphor that emits red light when excited by the laser beam, the second sub-pixel contains a second phosphor that emits green light, and a third sub-pixel contains a third phosphor that emits blue light.

Some examples of phosphor materials suitable for use when laser beam 106 is operated at near-UV wavelengths are: 1) Ru-doped BaMgAl₁₄O₂₃ which responds to near-UV excitation by emitting light at wavelengths near 450 nm, 2) Ru-doped SrGa₂S₄ which responds to near-UV excitation by emitting light at wavelengths near 500 nm, 3) Ru-doped Y₂O₃ which responds to near-UV excitation by emitting light at wavelengths near 610 nm. These phosphors are manufactured commercially by several manufacturers. For example, Nantex Industry Corporation produces several types of phosphors including the phosphors described above.

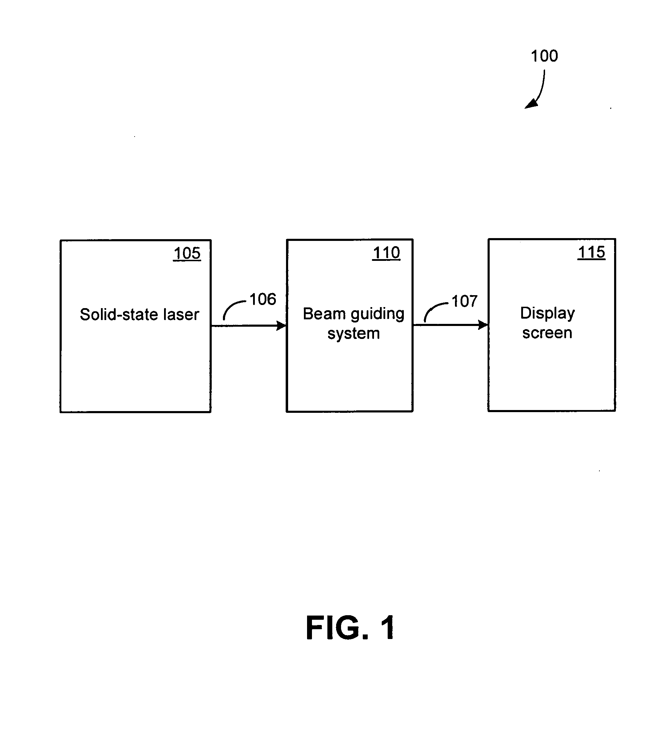

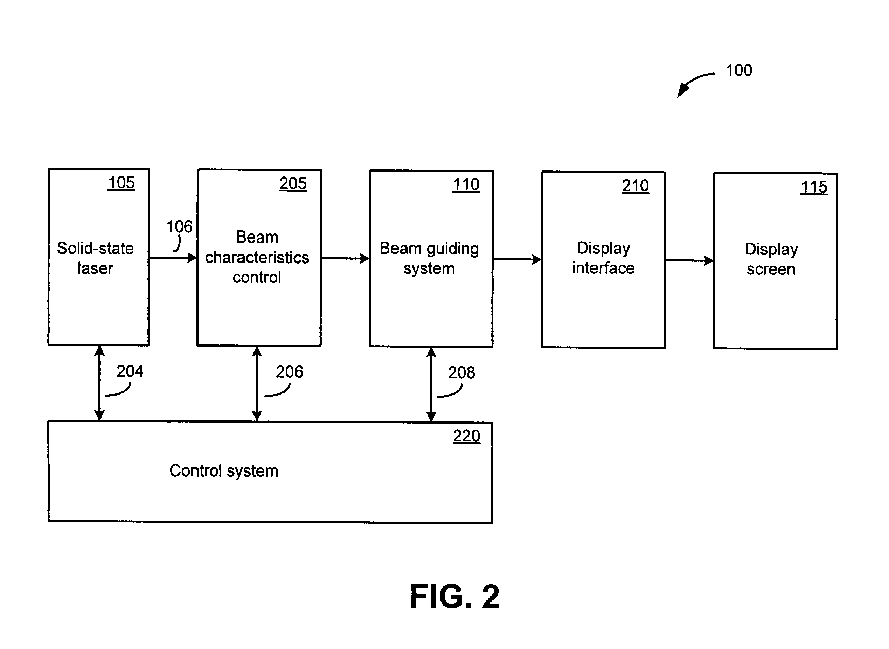

FIG. 2 shows some additional elements that are optionally used in display system 100 of FIG. 1. Among these additional elements, beam characteristics control 205 is configured to receive laser beam 106 and control certain characteristics such as beam spread, beam propagation direction, beam divergence, and beam intensity of laser beam 106. In a first embodiment, a passive element, such as, a mirror, a lens, or a grating, is used to alter beam characteristics; while in a second embodiment an active element, such as an optical amplifier, an optical attenuator, or an optical switch, is used instead.

Control system 220 is used to control the elements in beam characteristics control 205. For example, when the element is a passive element such as a mirror, control system 220 provides a control signal via control line 206 to position the mirror for directing laser beam 106 in a desired direction. When the element is an active element, for example an electrically-controlled optical attenuator, control system 220 provides a control signal via control line 106 to set the optical attenuation factor of the attenuator to a desired value.

Control system 220 is also used to control solid state laser 105. In one embodiment in accordance with the invention, control system 220 provides bi-directional control signals via one or more control lines embodied in FIG. 2 by control line 204, to set or to monitor various parameters of solid state laser 105. For example, in a first direction, control line 204 is used to provide a first control signal for setting a desired laser current, and a second control signal for turning on and turning off solid state laser 105. In a second direction, control line 204 is used to receive signals from solid state laser 105. These signals provide measurements related to various parameters such as laser current, laser temperature, and system failure conditions.

Control system 220 is further used to control beam guiding system 110. In one example, control system 220 provides control signals via control line 208 to configure an array of micro-mirrors in beam guiding system 110. In another example, control system 220 provides a control signal via control line 208 to configure a liquid crystal switching element in an optical switching module.

Control signals associated with control lines 204, 206, and 208 are implemented in various ways in different embodiments in accordance with the invention. Some examples of control signals are: an analog electrical signal, a digital electrical signal, an optical signal, a mechanical activation signal, and a wireless signal.

Display interface 210 is configured to receive the laser beam from beam guiding system 210, and is control certain characteristics of the received laser beam before propagating the beam towards display screen 115. For example, one or more elements, such as a filter screen, a grating, an optical diffuser, a polarizing screen, or a pixelated screen grid, used individually or in combination, are used to alter various beam characteristics prior to impact upon display screen 115.

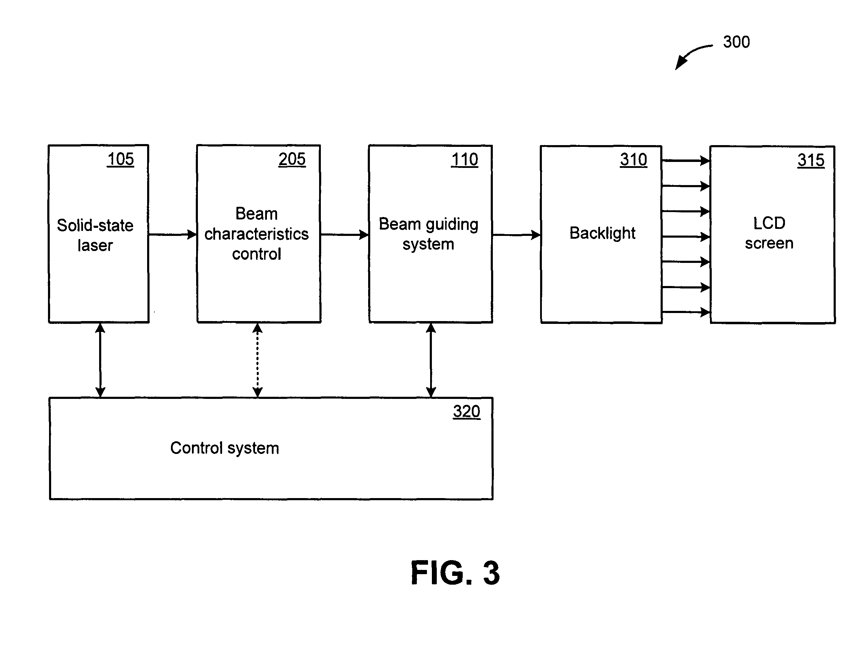

FIG. 3 shows a second exemplary embodiment of a display system 300 in accordance with the invention incorporating solid state laser 105 and a backlight panel 310. Backlight panel 310 has a first major surface upon which is present a phosphor layer that radiates light in an approximate wavelength range between 450 nm and 650 nm when excited by the laser beam received from beam guiding system 110. An opposing major surface is optically coupled to a liquid crystal display (LCD) screen 315. This opposing surface provides the radiated light as backlighting for LCD screen 315 to enable the viewer to see an image generated by liquid crystals of LCD screen 315. The image is generated using an image driver system (not shown) that configures the individual liquid crystals.

In this exemplary embodiment, beam guiding system 110 is configured to receive the laser beam from beam characteristics control 205 and direct the beam in a suitable pattern upon the phosphor layer of the backlight panel. The pattern is selected to generate a uniform level of illumination across the entire opposing major surface of backlight panel 310. In a first embodiment, the pattern corresponds to a scanning pattern, such as an interlaced scanning pattern or a progressive scanning pattern, wherein the laser beam is directed sequentially upon various locations on the phosphor layer. These scanning patterns are described below in more detail using other figures.

In an embodiment in accordance with the invention, the pattern is a non-scanning pattern such as a diffused light that is projected simultaneously upon the entire phosphor coating of the backlight panel. Beam guiding system 110 generates the diffused light from the laser beam by utilizing suitable optics, for example, an optical grating or a diffuser screen.

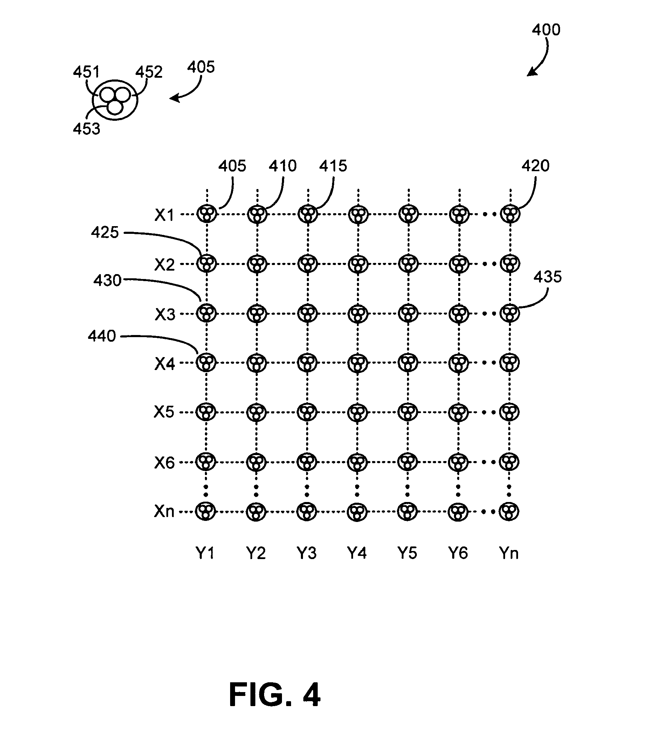

FIG. 4 shows an exemplary array 400 of pixels and sub-pixels of the phosphor layer of display screen 115 or backlight panel 310. In this exemplary embodiment, each pixel of array 400 is formed of three sub-pixels. For example, pixel 405 has a red sub-pixel 451, a green sub-pixel 452, and a blue sub-pixel 453. In another embodiment, a fourth sub-pixel that radiates white light is used in addition to the three sub-pixels 451, 452, and 453 to enhance the average radiation level of pixel 405 so as to control the brightness of an image. The three sub-pixels 451, 452, and 453 are shown adjacent to one another in a triangular configuration. In other embodiments, one or more sub-pixels overlap each other. Furthermore, in other embodiments, a pixel may be formed of two or more sub-pixels.

Array 400 is shown containing several rows X1 through Xn and several columns Y1 through Yn with a pixel located at the intersection of each row and each column. When interlaced scanning is employed, the laser beam is configured to strike all the pixels along an odd-numbered row, skip the adjacent even-numbered row and then strike all the pixels along the next odd-numbered row. Specifically, the laser beam first strikes row X1 beginning with pixel 405 before sequentially striking pixels 410 and 415 and other pixels along row X1. After striking the last pixel 420 of odd-numbered row X1, the laser beam skips even-numbered row X2, and proceeds to strike the pixels of row X3 beginning with pixel 430. After all the odd-numbered rows of the array have been scanned, the laser beam is directed upon the first pixel 425 of even-numbered row X2. Laser beam then strikes all the pixels along even-numbered row X2, skips the adjacent odd-numbered row X3, and strikes the pixels of even-numbered row X4 starting with pixel 440. After all the even-numbered rows have been scanned, the laser beam is directed back to pixel 405 of the odd-numbered row X 1 once again, and the entire scanning pattern is repeated as desired. The scanning is carried out at a certain scanning rate that has been selected to provide an acceptable image quality.

When progressive scanning is employed, the laser beam is configured to strike all the pixels of a first row followed by all the pixels of the next adjacent row. The odd-even row pattern of interlaced scanning is not used in progressive scanning. Also, the progressive scan rate is typically different than the non-interlaced scanning rate.

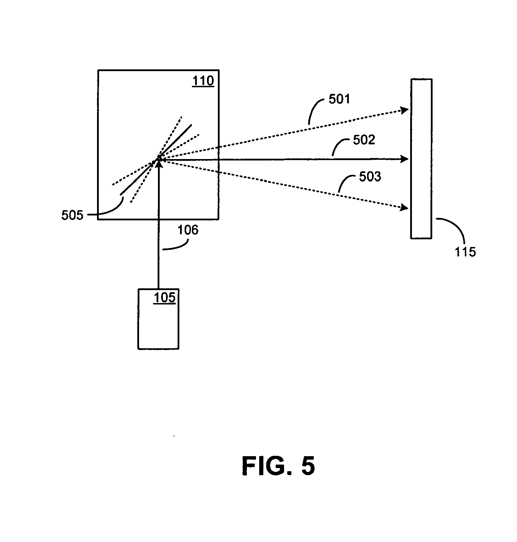

FIG. 5 shows an exemplary embodiment of beam guiding system 110 in accordance with the invention. In this embodiment, a mirror 505 is positioned to receive laser beam from solid state laser 105 and direct it towards display screen 115. Mirror 505 is positioned at a first instance to direct light along axis 501 to impact a first location on the phosphor layer of display screen 115. Mirror 505 is positioned at a second instance to direct light along axis 502 to impact a second location on the phosphor layer of display screen 115, and at a third instance to direct light along axis 503 to impact a third location on the phosphor layer of display screen 115. Therefore, by suitably positioning mirror 505 at various instances, the laser beam is directed upon various locations of the phosphor layer, and can be configured to operate in the scanning patterns described above.

The orthogonal positioning of solid state laser 105 with respect to beam guiding system 110 and display screen 115 provides for a display system that has a compact size in comparison to a display system where a solid state laser is located in horizontal alignment with a beam guiding system and a display screen.

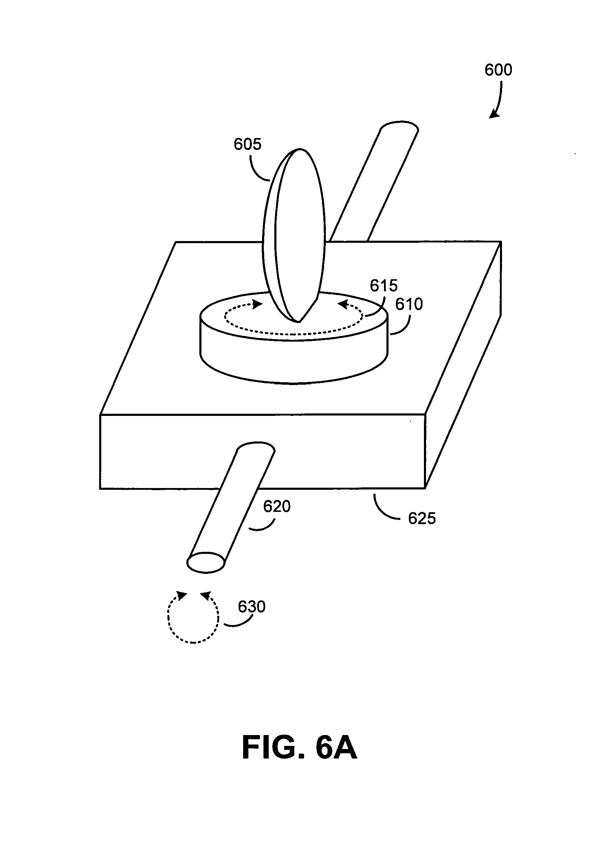

FIG. 6A shows a perspective view of an exemplary embodiment of mount 600 in accordance with the invention that is a part of beam guiding system 110. Mirror 605 is mounted on a rotatable platform 610. A major reflection surface of mirror 605 is oriented to reflect an incident laser beam (not shown) in a direction parallel to a major surface of rotatable platform 610. Rotatable platfonn 610, which is rotatable bi-directionally as indicated by dotted line 615, is located upon a tiltable platform 625. A rotatable shaft 620 traverses tiltable platform 625 and is operable to adjust the tilt angle of tiltable platform 625. Rotatable shaft 620 is rotatable bi-directionally as indicated by dotted line 630.

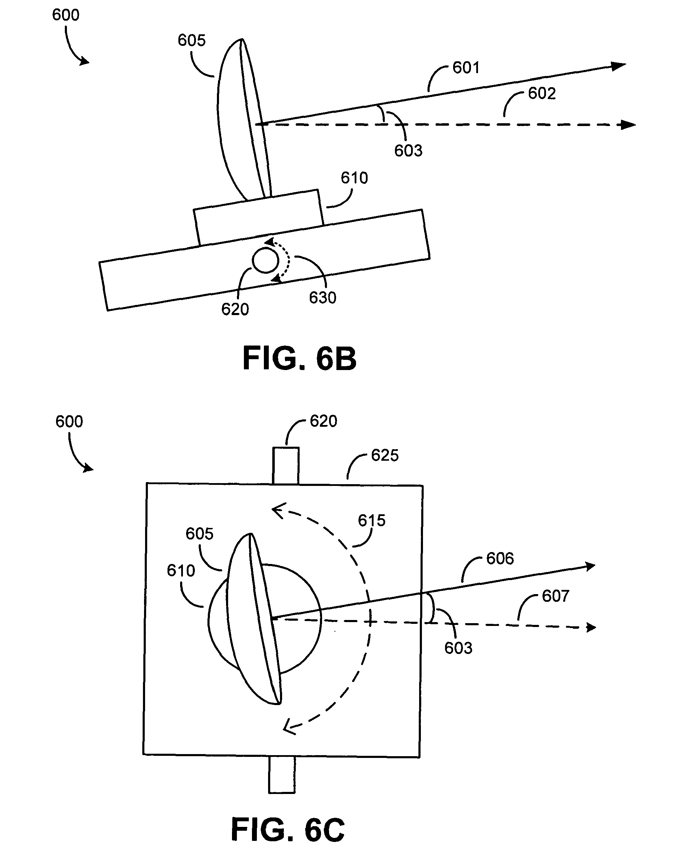

Rotatable shaft 620 and rotatable platform 610 are operated to set a desired vertical angle of projection and a desired lateral angle of projection respectively for reflecting the incident laser beam in a desired direction. This is described further using FIGs. 6B and 6C.

FIG. 6B shows a side-view of mount 600 to describe setting the desired vertical angle of projection. When rotatable shaft 620 is set in a first position, the incident laser beam is reflected along an axis that is termed in this example as reference axis 601. When rotatable shaft 620 is set to a second position, the incident laser beam is reflected along a second axis 602 which has a vertical angle 603 of projection with reference to reference axis 601. Similarly, rotatable shaft 620 can be positioned to reflect the laser beam in a variety of vertical angles of projection.

FIG. 6C shows a top-view of mount 600 to describe setting the desired lateral angle of projection. When rotatable platform 610 is set in a first position, the incident laser beam is reflected along an axis that is termed in this example as reference axis 606. When rotatable platform 610 is set to a second position, the incident laser beam is reflected along a second axis 607 which has a lateral angle 604 of projection with reference to reference axis 606. Similarly, platform 610 can be positioned to reflect the laser beam in a variety of lateral angles of projection.

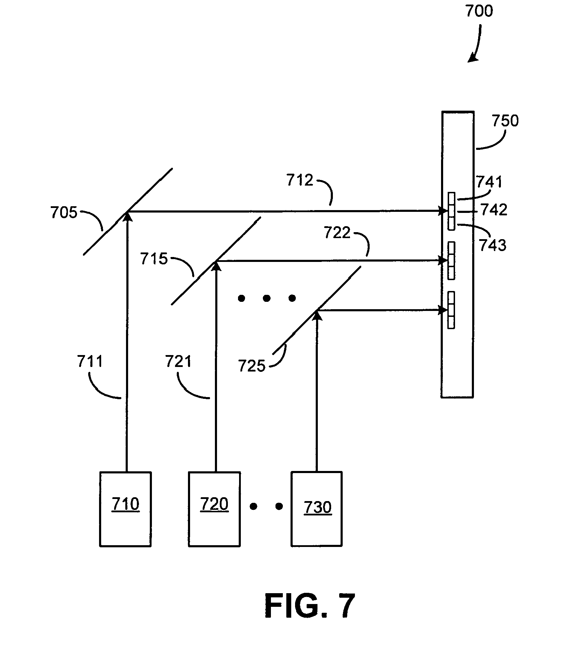

FIG. 7 shows an exemplary embodiment of display system 700 in accordance with the invention incorporating multiple solid state lasers, multiple beam guiding systems, and a single display screen. In this exemplary embodiment, a first solid state laser 710 generates a laser beam 711 that is directed upon a first beam guiding system formed of a reflecting element such as mirror 705. Mirror 705 directs the laser beam by reflecting it towards display screen 750. The reflected laser beam 712 is incident upon a phosphor layer of display screen 750. Specifically, the reflected laser beam 712 strikes a first pixel composed of three sub-pixels 741, 742, and 743. Reflected laser beam 712 strikes each of the sub-pixels 741, 742, and 743 sequentially to produce for example, a composite red-green-blue (RGB) pixel.

Solid state laser 720 generates a laser beam 721 that is directed upon a second beam guiding system formed of a second reflecting element, mirror 715. Mirror 715 directs the laser beam by reflecting it towards display screen 750. The reflected laser beam 722 is incident upon the phosphor layer of display screen 750. Specifically, the reflected laser beam 722 strikes a second pixel composed of three sub-pixels. Reflected laser beam 722 strikes each of the sub-pixels sequentially to produce for example, a composite red-green-blue (RGB) pixel.

Similarly, solid state laser 730 and mirror 725 represent the "nth" elements of the multiple elements of display system 700.

In this exemplary embodiment in accordance with the invention, solid state lasers 710, 720, and 730 have identical operating wavelengths. In an alternative embodiment, each of solid state lasers 710, 720, and 730 has a different operating wavelength. The different operating wavelengths are selected in a range of wavelengths from about 330 nm to about 440 nm. In yet another embodiment, the multiple beam guiding systems are implemented with reflecting elements other than mirrors. For example, each beam guiding system is implemented using a liquid crystal spatial modulator. Several of these liquid crystal spatial modulators may be housed in a single, integrated package.

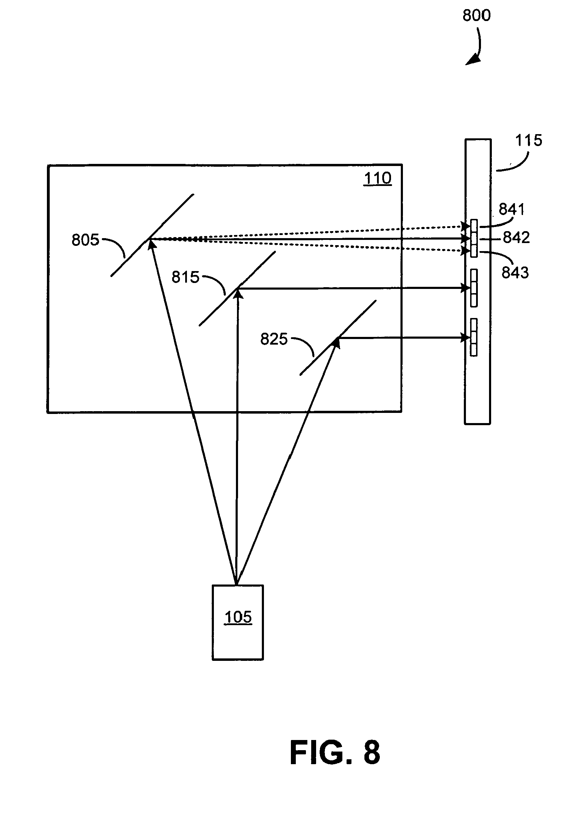

FIG. 8 shows an exemplary embodiment of display system 800 in accordance with the invention incorporating a single solid state laser 105, a single display screen 115, and a beam guiding system 110 having multiple reflecting elements. Solid state laser 105 generates a laser beam that is directed to strike each of the mirrors contained in beam guiding system 110. In an embodiment in accordance with the invention, the laser beam strikes all the mirrors simultaneously. Such an embodiment is implemented using a diffuser element located in beam characteristics control 205, which was described above with reference to FIG. 2. In an embodiment, solid state laser 105 is dynamically moved through a number of positions to project the laser beam in a sequential pattern upon each of the mirrors contained in beam guiding system 110.

In an exemplary embodiment of beam guiding system 110 in accordance with the invention, a micro electro mechanical system (MEMS) containing an array of micro-mirrors is used to implement the mirrors of FIG .8. A commercially available device containing an array of micro-mirrors is available from Texas Instruments. Such a device, sometimes referred to as a digital micro-mirror device (DMD) is known in the art, and is used extensively in digital light projection (DLP) imaging applications. In this exemplary embodiment, the number of micro-mirrors corresponds to the number of pixels present in an image displayed on display screen 115.

Micro-mirror 805 is configured to direct the laser beam on to a pixel located on display screen 115. The pixel is composed of multiple sub-pixels and micro-mirror 805 directs the laser beam on to each of these multiple sub-pixels in a sequential pattern.

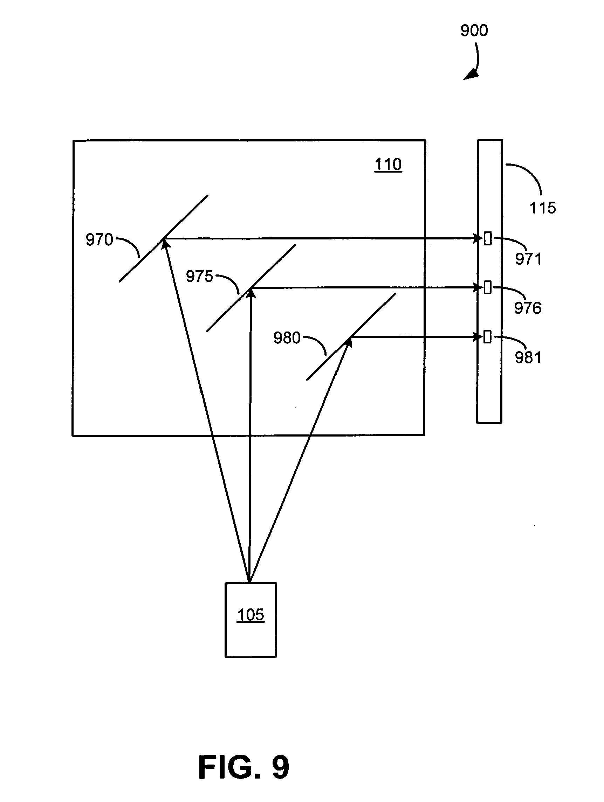

FIG. 9 illustrates an embodiment of a display system 900 incorporating a single solid state laser 105, a single display screen 115, and a beam guiding system 110 having an array of micro-mirrors. In the embodiment, each micro-mirror is devoted to directing the laser beam on to only one type of sub-pixel. For example, micro-mirror 970 directs the laser beam upon one red sub-pixel 971, while micro-mirror 975 directs the laser beam upon one green sub-pixel 976, and micro-mirror 980 directs the laser beam upon one blue sub-pixel 981. In the exemplary embodiment, the number of micro-mirrors corresponds to the number of sub-pixels that are present in an image displayed on display screen 115.

In other embodiments in accordance with the invention, beam guiding system 110 is implemented using an array of liquid crystal spatial modulators. The multiple liquid crystal spatial modulators may be housed in a single integrated package.

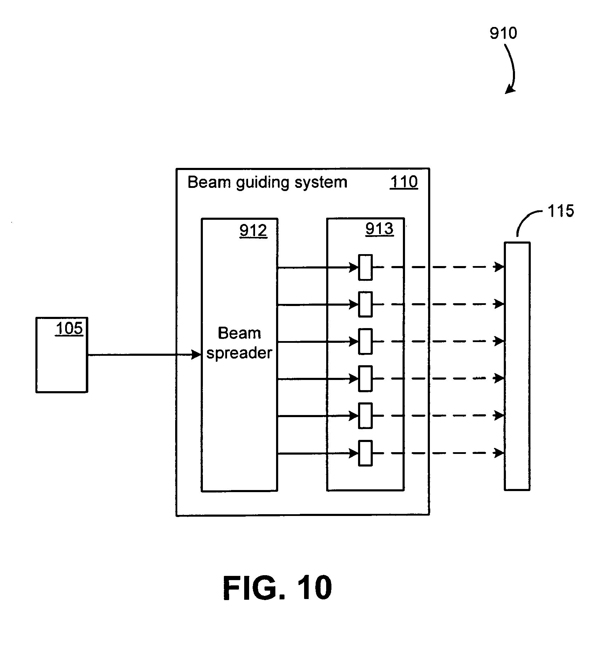

FIG. 10 shows an exemplary embodiment of a display system 910 in accordance with the invention incorporating a single solid state laser 105, a single display screen 115, and a beam guiding system 110 having a beam spreader 912 and multiple beam guiding elements housed in an optical switching module 913. Beam guiding system 110 does not use an array of reflecting elements as described in other embodiments described with reference to figures above. Instead, an array of optical transmission control elements is used. Some examples of optical transmission control elements are: a light modulator, an optical switch, and an optical attenuator.

Optical switching module 913 is a LCD module and each of the optical switching elements is a liquid crystal. In a first switching configuration, each liquid crystal allows the laser beam generated by solid state laser 105 to propagate towards display screen 115 thereby generating a light pixel upon display screen 115. In a second switching configuration, each liquid crystal blocks the laser beam generated by solid state laser 105 and prevents propagation towards display screen 115 thereby generating a dark pixel upon display screen 115. Display screen 115 is typically positioned close to beam guiding system 110 to facilitate maximum optical coupling.

The above-described embodiments are merely set forth for a clear understanding of the principles of the disclosure. Many variations and modifications may be made without departing substantially from the disclosure and will be apparent to those skilled in the art. All such modifications and variations are included herein within the scope of this disclosure.

## Claims

1. A display system (100, 300, 700, 800, 900, 910) comprising:
a display screen (115) comprising a first phosphor subpixel (451);
a first solid-state laser (105) operable to generate a laser beam of a first operating wavelength in a range of operating wavelengths from about 330 nm to about 440 nm; and
a first beam guiding system (110) operable to receive the laser beam from the first solid-state laser and to direct the laser beam upon the first phosphor subpixel, whereupon the first phosphor subpixel is excited to emit light of a first color in a wavelength range from about 450 nm to about 650 nm.

2. The display system of claim 1, wherein the first operating wavelength is approximately 405 nm.

3. The display system of claim 2, wherein the first solid-state laser is an edge-emitting device comprising (AlₓIn₁₋ₓ)_{y}Ga_{1-y}N where 1= < x < 0 and 1= < y < 0.

4. The display system of claim 3, wherein the first color is one of a) a red color having a wavelength of approximately 650 nm, b) a green color having a wavelength of approximately 535 nm, and c) a blue color having a wavelength of approximately 450 nm.

5. The display system of claim 1, wherein the first beam guiding system comprises a micro electro mechanical system (MEMS).

6. The display system of claim 5, wherein the first beam guiding system comprises one of a) a light reflecting element and b) an optical transmission control element.

7. A display system (100), comprising:
a liquid crystal display screen (315);
a backlight panel (310) comprising a phosphor coating, the backlight panel operable to provide backlight illumination to the liquid crystal display screen;
a solid-state laser (105) operable to generate a laser beam of a first operating wavelength in a range of operating wavelengths from about 330 nm to about 440 nm; and
a beam guiding system (110) operable to receive the laser beam from the solid-state laser and to direct the beam in a scanning pattern upon the phosphor coating of the backlight panel, whereupon the phosphor coating is excited to emit light of a first color in a wavelength range from about 450 nm to about 650 nm.

8. The display system of claim 7, wherein the scanning pattern comprises one of a) an interlaced scanning pattern and b) a progressive scan pattern.

9. A method of displaying an image, the method comprising:
providing a display screen (115) comprising a first phosphor subpixel;
providing a solid-state laser (105);
configuring the solid-state laser to generate a laser beam of a first operating wavelength in a range of operating wavelengths from about 330 nm to about 440 nm; and
directing the laser beam to impact upon the first phosphor subpixel, whereupon the first phosphor subpixel is excited to emit light of a first color in a wavelength range from about 450 nm to about 650 nm.

10. The method of claim 9, wherein directing the laser beam to impact upon the first phosphor subpixel comprises one of a) selectively reflecting the laser beam and b) selectively controlling the transmission of the laser beam.
